(19) Europäisches Patentamt / European Patent Office / Office européen des brevets

(11) **EP 4 309 029 B1**

(12) **FASCICULE DE BREVET EUROPEEN**

(45) Date de publication et mention de la délivrance du brevet:
**12.02.2025 Bulletin 2025/07**

(21) Numéro de dépôt: **22714855.8**

(22) Date de dépôt: **15.03.2022**

(51) Classification Internationale des Brevets (IPC):
*G06F 3/041* (2006.01)    *G06F 3/0488* (2022.01)

(52) Classification Coopérative des Brevets (CPC):
**G06F 3/0416; G06F 3/0488;** G06F 3/04186

(86) Numéro de dépôt international:
**PCT/EP2022/056683**

(87) Numéro de publication internationale:
**WO 2022/194859 (22.09.2022 Gazette 2022/38)**

(54) **PROCÉDÉ DE CONTRÔLE DE CONTAMINATION PAR AU MOINS UN CONTAMINANT D'UN ÉCRAN TACTILE, PROGRAMME D'ORDINATEUR ET SYSTÈME ÉLECTRONIQUE DE CONTRÔLE ASSOCIÉS**

VERFAHREN ZUR ÜBERPRÜFUNG EINES BERÜHRUNGSBILDSCHIRMS AUF VERUNREINIGUNG DURCH MINDESTENS EINE VERUNREINIGUNG, ZUGEHÖRIGES COMPUTERPROGRAMM UND ELEKTRONISCHES STEUERUNGSSYSTEM

METHOD FOR CHECKING A TOUCH SCREEN FOR CONTAMINATION BY AT LEAST ONE CONTAMINANT, ASSOCIATED COMPUTER PROGRAM AND ELECTRONIC CONTROL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.03.2021 FR 2102605**

(43) Date de publication de la demande:
**24.01.2024 Bulletin 2024/04**

(73) Titulaire: **Revenue Collection Systems France SAS**
**91220 Plessis-Pâté (FR)**

(72) Inventeur: **DUMAY, Nicolas**
**91229 BRETIGNY SUR ORGE CEDEX (FR)**

(74) Mandataire: **Lavoix**
**2, place d'Estienne d'Orves**
**75441 Paris Cedex 09 (FR)**

(56) Documents cités:
| | |
|---|---|
| **WO-A1-2019/136381** | **JP-A- 2018 084 974** |
| **US-A1- 2012 206 384** | **US-A1- 2013 141 344** |
| **US-A1- 2020 279 642** | **US-A1- 2021 052 756** |

**Description**

La présente invention concerne un procédé de contrôle de contamination par au moins un contaminant d'un écran tactile d'une installation.

L'invention concerne également un programme d'ordinateur comportant des instructions logicielles qui, lorsqu'elles sont exécutées par un ordinateur, mettent en œuvre un tel procédé de génération.

L'invention concerne également un système électronique de contrôle de contamination par au moins un contaminant d'un écran tactile d'une installation.

On entend ici par « contaminant », une substance chimique, virale ou bactériologique.

L'invention concerne le domaine de la prévention d'une contamination par contact tactile d'une surface contaminée.

Il est possible de transmettre un contaminant par contacts successifs d'une même surface par plusieurs personnes. Ainsi, une première personne portant un contaminant sur ses mains, dépose le contaminant sur la surface lors d'un premier contact. Puis, lors d'un deuxième contact, une deuxième personne touche la surface contaminée, le contaminant, alors présent sur la surface, se fixe à la main de la deuxième personne qui est alors contaminée.

Ainsi, il est utile de détecter des éventuelles contaminations de surface dans le cadre de surfaces touchées à de multiples reprises par une pluralité d'utilisateurs.

Le document US 2014/023266 2 A1 décrit une telle détection. En particulier, ce document décrit la présence d'un capteur configuré pour déterminer, préalablement à l'appui de l'utilisateur sur la surface, la présence de contaminants sur la main de l'utilisateur. À cet effet, le capteur est propre à détecter une odeur ou un goût indicatifs du contaminant. En variante, le capteur utilise une technologie piézoélectrique ou de chromogènes micro-biosensitifs.

Toutefois, l'identification de chaque contaminant dépend alors fortement du capteur et/ou du calibrage du capteur. En effet, les capteurs configurés pour détecter un certain type de contaminant sont souvent inefficaces pour détecter d'autres types de contaminants. Ainsi, s'il était choisi d'identifier un nouveau contaminant, il serait alors nécessaire d'adapter physiquement le ou les capteurs à ce contaminant.

On connait en outre des documents US 2021/052756 A1, WO 2019/136381 A1, US 2020/279642 A1, et JP 2018 084974 A des procédés de contrôle de contamination par au moins un contaminant.

L'objet de l'invention est alors de proposer un procédé de contrôle de contamination plus simple à intégrer dans un appareil déjà existant.

À cet effet, l'invention a pour objet un procédé de contrôle de contamination par au moins un contaminant selon la revendication 1.

Avantageusement, avec le procédé selon l'invention, il n'est pas nécessaire de déterminer préalablement une manière de détecter chaque contaminant individuellement. Ainsi, le procédé est plus simple intégrer dans un appareil déjà existant.

Suivant d'autres aspects avantageux de l'invention, le procédé de contrôle est selon l'une quelconque des revendications 2 à 9.

L'invention a également pour objet un produit programme d'ordinateur selon la revendication 10.

De plus, l'invention a pour objet un système électronique de contrôle de contamination par au moins un contaminant selon la revendication 11.

Ces caractéristiques et avantages de l'invention apparaîtront plus clairement à la lecture de la description qui va suivre, donnée uniquement à titre d'exemple non limitatif, et faite en référence aux dessins annexés, sur lesquels :

[Fig. 1] la figure 1 représente une installation comprenant un système électronique de contrôle ;
[Fig. 2] la figure 2 est une vue schématique d'un écran tactile de l'installation de la figure 1, sur lequel les surfaces unitaires sont représentées ;
[Fig. 3] la figure 3 représente un organigramme d'un mode de réalisation d'un procédé de contrôle mis en œuvre par le système électronique de contrôle de la figure 1, et
[Fig. 4] la figure 4 représente un exemple d'évolution temporelle d'un indicateur de contamination d'une surface unitaire d'un écran tactile compris dans l'installation de la figure 1.

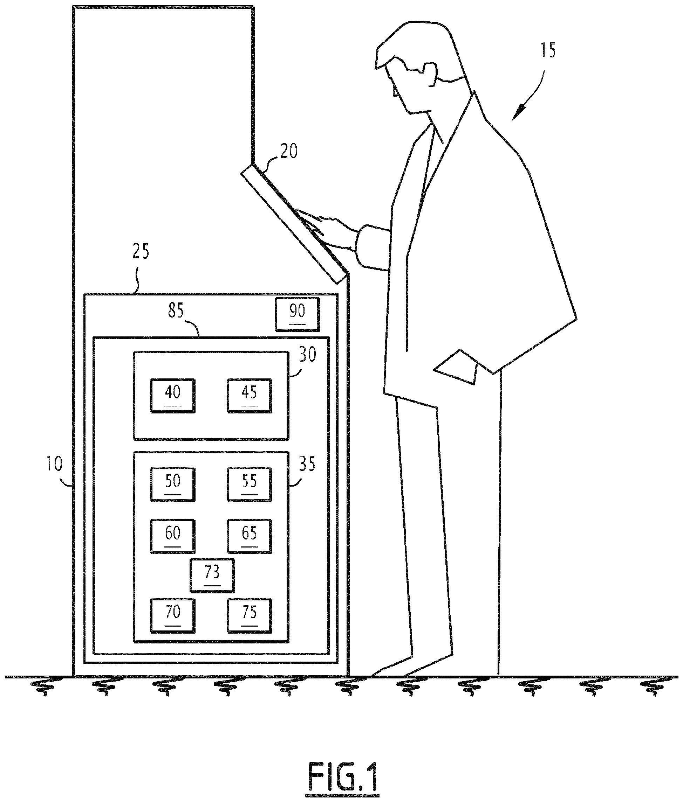

En référence à la figure 1, une installation 10 est par exemple comprise au sein d'un hall de gare. L'installation 10 est par exemple un automate de vente de titres de transport. Un titre de transport est droit à voyager stocké sur un ticket, une carte à puce, un ordiphone (de l'anglais *smartphone*), ou un autre dispositif électronique propre à stocker ce titre. Les titres de transport vendus par l'installation 10 sont par exemple des droits à voyager pour un métro, un bus, un tramway ou un train.

En variante, l'installation 10 est un automate de vente de titres de parking.

En variante encore, l'installation 10 est un système audiovisuel embarqué dans un véhicule tel qu'un avion, un train ou un bateau.

L'installation 10 est propre à proposer des services ou des biens à un utilisateur 15. À cet effet, l'installation 10 comprend un écran tactile 20 et un dispositif électronique de service 25.

L'écran tactile 20 est configuré pour afficher un contenu issu du dispositif électronique de service 25, et est notamment propre à afficher un contenu sélectionnable par l'utilisateur 15.

En retour, l'écran tactile 20 est adapté pour recevoir des commandes d'utilisateur(s) par appui digital. Plus particulièrement, l'écran tactile 20 est configuré pour transmettre au dispositif électronique de service 25 un signal représentatif d'un appui, et de la localisation de cet appui par l'utilisateur 15.

De manière connue en soi, l'écran tactile 20 comprend un afficheur non-représenté et une pluralité de capteurs non-représentés. L'afficheur est configuré pour afficher le contenu sélectionnable issu du dispositif électronique de service 25.

Les capteurs sont configurés pour détecter un appui de l'utilisateur 15 et pour déterminer les coordonnées $x_0$, $y_0$ d'un centre de l'appui, dans un repère prédéterminé de l'écran tactile 20, par exemple un repère orthogonal ayant son origine en bas à gauche de l'écran 20.

L'écran tactile 20 est alors propre à envoyer au dispositif électronique de service 25, un signal de sélection comprenant les coordonnées $x_0$, $y_0$ de l'appui de l'utilisateur 15.

En complément facultatif, l'écran tactile 20 est propre à envoyer le signal de sélection tant que l'utilisateur 15 maintient son appui sur l'écran 20.

En variante, les capteurs sont configurés pour déterminer un ensemble de coordonnées $x_0$, $y_0$, $x_1$, $y_1$, $x_2$, $y_2$, correspondant à plusieurs points d'appuis de l'utilisateur 15 sur l'afficheur. L'ensemble de points d'appui comprend alors plusieurs points sensiblement proches les uns des autres puisqu'ils correspondent à l'appui par un doigt de l'utilisateur 15. La terminologie « sensiblement proche » est entendue ici au sens d'une distance comprise entre 1 et 3 centimètres, correspondant à une longueur ou à une largeur d'une phalange d'un doigt.

Le dispositif électronique de service 25 comprend un système électronique de traitement 30 et un système électronique de contrôle 35.

Le système électronique de traitement 30 est configuré pour interagir avec l'utilisateur 15 pour lui fournir les services ou les biens qu'il désire.

Le système électronique de traitement 30 comprend un module d'acquisition/envoi 40 et un module de traitement 45.

Le module d'acquisition/envoi 40 est configuré pour acquérir le signal de sélection depuis l'écran tactile 20. Il est également configuré pour émettre, vers l'écran tactile 20, le contenu à afficher, en provenance du module de traitement 45.

Le module de traitement 45 est configuré pour traiter le signal de sélection reçu par le module d'acquisition/envoi 40.

En outre, le module de traitement 45 est configuré pour déterminer le contenu à afficher. Cette détermination est par exemple conséquente à la réception du signal de sélection.

Plus particulièrement, le contenu à afficher comprend plusieurs pages à afficher et comporte, dans chaque page, au moins une case sélectionnable. Un bouton validation, une flèche de changement de page, une molette de défilement ou une icône de zoom sont des exemples de cases sélectionnables. Le contenu comprend alors le paramétrage géométrique de chaque page, c'est à dire les dimensions géométriques de chaque case et la localisation de chaque case sur l'écran tactile 20 une fois que la page sera affichée.

Suite à une sélection par l'utilisateur 15 d'une case, tel qu'un zoom, les dimensions géométriques et/ou la localisation d'une case est susceptible de changer. Ainsi le paramétrage du contenu est propre à évoluer même sans changement de page.

Dans l'exemple d'une installation de vente de tickets de transport, un premier contenu affiché comprend par exemple un message demandant à l'utilisateur 15 le nombre de ticket(s) qu'il souhaite acquérir. Le contenu comprend en outre une pluralité de cases dans lesquelles il est indiqué des chiffres, par exemple compris entre 1 et 10. L'écran tactile 20 est alors configuré pour afficher le contenu, c'est-à-dire pour afficher chaque élément dudit contenu à une position prédéterminée par le module de traitement 45.

Dans cet exemple, le signal de sélection comprend par exemple les coordonnées relatives à la case indiquant le chiffre 1.

Le module de traitement 45 est configuré pour, dans un tel exemple, générer un nouveau contenu comprenant un message invitant l'utilisateur 15 à payer un tarif prédéfini correspondant à un ticket de transport.

Le système électronique de contrôle 35 comprend un module de réception 50, un module de détermination 55, un module de détection 60, un module de mise à jour 65, un module d'estimation 70, un module d'apprentissage 73, et un module d'émission 75. Le module d'apprentissage 73 est facultatif.

Le système électronique de contrôle 35 est configuré pour contrôler une quantité de contaminants sur l'écran tactile 20.

Le module de réception 50 est configuré pour recevoir, depuis la pluralité de capteurs de l'écran tactile 20 ou depuis le module d'acquisition-envoi 40, le signal de sélection.

En complément facultatif, le module de réception 50 est configuré pour enregistrer un horaire auquel le signal de sélection est reçu, dit horaire de réception.

En complément facultatif encore, le module de réception 50 est configuré pour enregistrer la durée de l'appui de l'utilisateur 15. A cet effet, le module de réception 50 est configuré pour enregistrer la durée pendant laquelle il reçoit, depuis l'écran tactile 20, le signal de sélection comprennent les même coordonnées $x_0$, $y_0$.

En variante, le module de réception 50 est également configuré pour recevoir des informations sur une température extérieure, depuis un capteur de température non-représenté.

En complément facultatif, le module de réception 50 est configuré pour recevoir, depuis le système électronique de traitement 30, le paramétrage de chaque page du contenu à afficher.

Le module de détermination 55 est configuré pour déterminer au moins une surface unitaire 80 sur l'écran tactile 20. L'écran tactile 20 comprend au moins deux surfaces unitaires 80.

Ainsi, le module de détermination 55 est alors préférentiellement configuré pour déterminer au moins deux surfaces unitaires 80 de l'écran tactile 20.

À cet effet, le module de détermination 55 est par exemple configuré pour définir un pavage de l'écran tactile 20 dans lequel chaque élément (ou pavé) est une surface unitaire 80 respective. De préférence, chaque surface unitaire 80 est de même géométrie et de mêmes dimensions qu'une autre surface unitaire 80 respective.

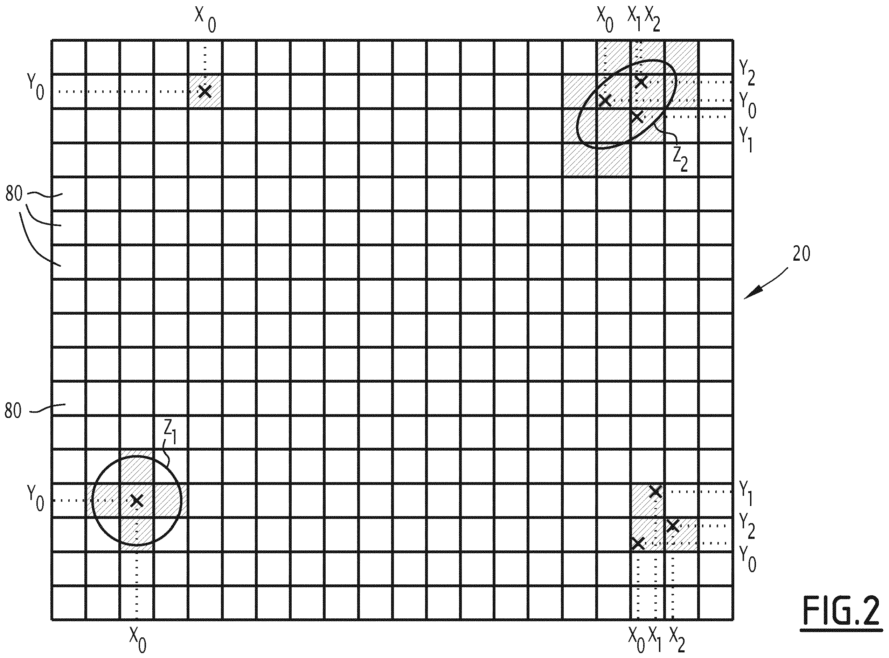

Par exemple, chaque surface unitaire 80 est rectangulaire, et sa longueur et sa largeur sont chacune comprises entre 5mm et 2cm. Ainsi, dans l'exemple de la figure 2, le module de détermination 55 est configuré pour effectuer un quadrillage de l'écran tactile 20 dans lequel chaque élément de quadrillage correspond à une surface unitaire 80 respective.

En variante, chaque surface unitaire 80 est triangulaire, pentagonale ou hexagonale.

Chaque surface unitaire 80 comprend alors des sommets et des côtés.

Chaque surface unitaire 80 est par exemple délimitée par les coordonnées de ses sommets. Le module de détermination 55 est alors configuré pour déterminer les coordonnées des sommets de chaque surface unitaire 80.

En variante, le module de détermination 55 est configuré pour déterminer de manière dynamique, chaque surface unitaire 80, suite à la réception, par le module de réception 50, du signal de sélection.

Le module de détection 60 est configuré pour détecter la ou les surfaces unitaires 80 ayant subi un appui de l'utilisateur 15, à partir du signal de sélection reçu par le module de réception 50.

Plus particulièrement, le module de détection 60 est configuré pour détecter la surface unitaire 80 ayant subi un appui, à partir des coordonnées $x_0$, $y_0$, $x_1$, $y_1$, $x_2$, $y_2$ comprises dans les signaux de sélection. Sur la figure 2, la ou les surfaces unitaires 80 détectées sont hachurées.

Le module de détection 60 est configuré pour effectuer une telle détection selon l'un des modes de détection suivants, représentés sur la figure 2.

Selon un premier mode de détection, représenté en haut à gauche de la figure 2, le module de détection 60 est configuré pour, lorsque le signal de sélection comprend les cordonnées $x_0$, $y_0$ d'un seul point, détecter la surface unitaire 80 ayant subi un appui, comme étant la surface 80 incluant géométriquement le point de coordonnées $x_0$, $y_0$.

En outre, les frontières entre chaque surface unitaire 80 étant d'épaisseur nulle, les coordonnées $x_0$, $y_0$ de chaque appui sont comprises dans une surface unitaire 80 respective.

En complément facultatif, selon le premier mode de détection le module de détection 60 est configuré pour, si les coordonnées $x_0$, $y_0$ d'un appui sont comprises dans une surface unitaire 80 respective mais sont distantes d'une frontière de cette surface 80 d'au plus une première valeur, détecter en outre la surface 80 adjacente à la surface 80 ayant subi l'appui comme ayant également subi l'appui.

Selon un deuxième mode de détection, représenté en bas à gauche de la figure 2, le module de détection 60 est configuré pour, lorsque le signal de sélection comprend les cordonnées $x_0$, $y_0$ d'un seul point, déterminer une première zone périphérique $z_1$ autour du point de coordonnées $x_0$, $y_0$.

Le module de détection 60 est alors configuré pour détecter la ou les surfaces unitaires 80 ayant subi l'appui de l'utilisateur 15 comme étant celles recouverte(s) par la première zone périphérique $z_1$ d'au moins un pourcentage P prédéfini. Si le pourcentage P est proche de 0 pourcent, alors chaque surface unitaire 80 recouverte, même très partiellement, par la première zone périphérique $z_1$, est détectée. A contrario, si le pourcentage P est proche de 100 pourcent, la ou les surfaces unitaires 80 détectées correspondent à des surfaces unitaires sensiblement entièrement recouvertes par la première zone périphérique $z_1$.

La première zone périphérique $z_1$ est par exemple circulaire, d'un rayon prédéfini, et centré sur le point de coordonnées $x_0$, $y_0$. Le rayon est notamment compris entre 25mm et 1cm.

En variante, la première zone périphérique $z_1$ est elliptique. Son grand axe et son petit axe sont alors prédéfinis. Le point de coordonnées $x_0$, $y_0$ est par exemple le centre, ou l'un des foyers, de la première zone périphérique $z_1$. Le petit axe est le grand axe de la première zone périphérique $z_1$ sont notamment compris entre 25mm et 1cm.

Selon un troisième mode de détection, représenté en bas à droite de la figure 2, le module de détection 60 est configuré pour, si le signal de sélection comprend les coordonnées $x_0$, $y_0$, $x_1$, $y_1$, $x_2$, $y_2$ de plusieurs points, détecter la ou les surfaces unitaires 80 ayant subi l'appui de l'utilisateur 15 comme étant la ou les surfaces unitaires 80 comprenant chacun des points de coordonnées reçus dans le signal de sélection.

Selon un quatrième mode de détection, représenté en haut à droite de la figure 2, le module de détection 60 est configuré pour, si le signal de sélection comprend les coordonnées $x_0$, $y_0$, $x_1$, $y_1$, $x_2$, $y_2$ de plusieurs points, déterminer une deuxième zone périphérique $z_2$ autour de ces points à l'aide d'un algorithme d'optimisation, tel que l'algorithme de moindres carrés. A cet effet, le module de détection 60 est configuré pour déterminer la deuxième zone périphérique $z_2$ ayant une forme prédéfinie, incluant chacun des points de cordonnées $x_0$, $y_0$, $x_1$, $y_1$, $x_2$, $y_2$, et dont des paramètres sont optimisés par application d'un algorithme de moindres carrés selon une technique connue en soi.

Si la deuxième zone périphérique $z_2$ est par exemple circulaire, les paramètres sont les coordonnées du centre de la deuxième zone $z_2$ et son rayon. Si la deuxième zone périphérique $z_2$ est par exemple elliptique, les paramètres sont alors : les coordonnées de l'un des foyers le zone, le petit-axe, le grand-axe et l'orientation du grand axe ou du petit axe.

Selon le quatrième mode de détection, le module de détection 60 est configuré pour détecter la ou chaque surface unitaire 80 ayant subi un appui de manière analogue au deuxième mode de détection mais à partir de la deuxième zone périphérique $z_2$ à la place de la première zone périphérique $z_1$.

En variante, le module de détection 60 est configuré pour, si le module de réception 50 reçoit une pluralité de signaux de sélection temporellement éloignés les uns des autres d'au plus une deuxième valeur, et comportant des coordonnées comprises dans une même surface unitaire 80 ou dans des surfaces unitaires 80 adjacentes, alors détecter chaque surface unitaire 80 incluant les coordonnées d'un signal de sélection et générer une pondération supérieure à 1 pour les surfaces unitaires 80 pour lesquelles les coordonnées reçues sont plus proches du centre que d'une frontière de ladite surface 80.

Le module de mise à jour 65 est configuré pour mettre à jour un indicateur du nombre d'appuis par surface unitaire 80. L'indicateur de nombre d'appuis par surface unitaire 80 est par exemple un compteur d'appuis, ou un estimateur de fréquence d'appuis.

Le module de mise à jour 65 est configuré pour, si l'indicateur de nombre d'appuis par surface unitaire 80 est un compteur d'appuis, incrémenter le compteur de chaque surface unitaire 80 détectée par le module de détection 60.

Le module de mise à jour 65 est configuré pour, si l'indicateur de nombre d'appuis est un estimateur de fréquence d'appuis, mettre à jour ledit estimateur pour chaque surface unitaire 80 en cumulant le nombre d'appuis, sur une première fenêtre temporelle glissante d'une durée prédéterminée, à partir de l'horaire de réception de chaque signal de sélection par le module de réception 50. La durée de la première fenêtre temporelle est par exemple comprise entre 5 minutes et 24 heures.

En variante, le module de mise à jour 65 est configuré pour, si l'indicateur de nombre d'appuis est l'estimateur de fréquence d'appuis, mettre à jour, pour chaque surface unitaire 80, un temps moyen entre deux sélections successives d'une même surface unitaire 80. Ce calcul étant par exemple réalisé sur une deuxième fenêtre temporelle glissante d'une durée par exemple comprise entre 10 minutes et 24 heures.

En variante également, le module de mise à jour 65 est configuré pour convertir l'indicateur de nombre d'appuis de chaque surface unitaire 80 en un indicateur de nombre d'appuis propre à chaque case de la page affichée par l'écran tactile 20. Ainsi, chaque case affichée recouvrant une ou plusieurs surfaces unitaires 80, le module de mise à jour 65 est configuré pour déterminer, pour chaque case de la page affichée, l'indicateur de nombre d'appuis de la case en effectuant une moyenne des indicateurs de nombre d'appuis de chaque surface unitaire 80 recouverte par la case.

Le module d'estimation 70 est configuré pour estimer un indicateur de contamination par au moins un contaminant prédéterminé en fonction de l'indicateur de nombre d'appuis de chaque surface unitaire 80 et/ou de chaque case du contenu affichée. A cet effet, le module d'estimation 70 est configuré pour appliquer un modèle prédéfini aux indicateurs de nombre d'appuis de l'ensemble des surfaces unitaires 80. Ainsi, l'indicateur de contamination est soit associé à chaque surface unitaire 80, soit associé à chaque case du contenu à afficher. Dans ce dernier cas, l'indicateur de nombre d'appuis de chaque case du contenu à afficher étant calculé à partir des indicateurs de nombre d'appuis de chaque surface unitaire 80 recouverte par ladite case, l'indicateur de contamination est également associé à au moins une surface unitaire 80.

Le modèle est configuré pour produire, par exemple, pour chaque surface unitaire 80, un indicateur de contamination proportionnel, et par exemple égal, à l'indicateur de nombre d'appuis associés. Avantageusement, avec un tel modèle, pour chaque surface unitaire 80, plus l'indicateur de nombre d'appuis est élevé, plus l'indicateur de contamination est également élevé, et inversement.

En variante, le modèle prend en compte simultanément l'indicateur de nombre d'appuis de tout ou partie des surfaces unitaires 80 et produit un indicateur de contamination pour chaque surface unitaire 80 prise en compte, à partir des indicateurs correspondant.

En variante encore, le modèle est configuré pour fournir un indicateur de contamination pour chaque case du contenu affichée par l'écran tactile 20.

En variante, le modèle prend également en compte des paramètres physiques de diffusion ou de concentration du contaminant sur l'écran tactile 20. Par exemple, le modèle prend en compte l'inclinaison de l'écran tactile 20, de manière prédéfinie, ou encore des données de température fournies au système électronique de contrôle 35, via le module de réception 50, depuis un capteur de température non-représenté. Dans cette variante, avantageusement, l'indicateur de contamination calculé via le modèle est propre à prendre en compte un déplacement des contaminants le long de l'écran tactile 20, le déplacement étant par exemple influencé par la température.

En variante, le modèle est propre à fournir une pluralité d'indicateurs de contamination, chacun respectif d'un contaminant prédéfini. A cet effet le modèle comprend, pour chaque contaminant considéré, un sous-modèle correspondant. Autrement dit, lors d'une application du modèle aux indicateurs de nombre d'appuis, chaque sous-modèle respectif d'un contaminant est alors appliqué aux indicateurs de nombre d'appuis.

Ainsi, considérant des propriétés physiques, chimiques et/ou biologiques différentes pour chaque contaminant, l'indicateur de contamination correspondant est alors avantageusement différent d'un autre.

A titre d'exemple, le modèle est par exemple, pour chaque surface unitaire 80 et pour au moins un contaminant de la forme :

[Math 1]

$$C(t) = C(t-1) + \left(C_{déposée} - C_{prélevée}\right)I_{appui}(t) + \alpha - \beta$$

où :

- $C(t)$ est l'indicateur de contamination à un instant $t$ ;
- $C(t-1)$ est l'indicateur de contamination à un instant $t-1$ ;
- $C_{déposée}$ est un indicateur d'une quantité de contaminant déposée sur l'écran tactile 20 par un appui, cet indicateur étant prédéfini pour chaque contaminant ;
- $C_{prélevée}$ est un indicateur d'une quantité de contaminant prélevée de l'écran tactile 20 par un appui, cet indicateur étant prédéfini pour chaque contaminant ;
- $I_{appui}(t)$ est l'indicateur du nombres d'appui détecté sur la surface unitaire 80 entre les instant $t-1$ et $t$ ;
- $\alpha$ est un coefficient de croissance ou de décroissance de l'indicateur de contamination par la présence de contaminant sur la surface unitaire considérée ou sur la case considérée, ce coefficient étant par exemple prédéfini pour chaque contaminant ou dépendant de grandeurs parmi lesquelles : l'indicateur de contaminant à l'instant $t-1$, la température, l'inclinaison l'écran 20 ; et
- $\beta$ est un coefficient de destruction estimant une quantité de contaminant détruite lors d'un nettoyage, le coefficient de destruction est par exemple prédéfini.

Le module d'apprentissage 73 est configuré pour recevoir depuis un opérateur ou une base de données distante non-représentée, un ensemble de données d'apprentissage labellisés et propres à un contaminant. La notion de données labellisées est entendue ici au sens de couple de données d'entrée et de données de sortie, dans lequel les données d'entrées comprennent un indicateur de nombre d'appuis et/ou des paramètres liés à l'installation et son environnement (température, inclinaison de l'écran tactile 20) et les données de sortie comprennent au moins un indicateur de contamination.

Ainsi, le module d'apprentissage 73 est configuré pour effectuer un apprentissage machine (de l'anglais *machine learning*) du modèle à partir des données labellisées. Autrement dit, le module d'apprentissage 73 est configuré pour générer un modèle ou corriger le ou l'un des modèles déjà existant(s) à partir des données labellisées, et en appliquant un algorithme d'apprentissage machine.

Le module d'émission 75 est configuré pour, si un ou plusieurs indicateurs de contamination dépassent un seuil, émettre un signal d'alerte. Le seuil est avantageusement prédéterminé.

Selon l'exemple dans lequel le modèle est configuré pour produire, pour chaque surface unitaire 80, plusieurs indicateurs de contamination respectifs de différents contaminants considérés, le module d'émission 75 est configuré pour comparer chaque indicateur de contamination a un seuil respectif. Tous les seuils sont par exemple égaux entre eux.

Le signal d'alerte est par exemple un message destiné à prévenir un opérateur ou l'utilisateur 15 qu'un nettoyage de l'écran tactile 20 est requis.

Le module d'émission 75 est alors configuré pour émettre ce message sous forme de communication filaire ou sans fil, à destination d'un centre de surveillance. Le centre de surveillance est par exemple situé dans la gare.

Alternativement, le signal d'alerte est un signal de commande de l'affichage de l'interface homme/machine. Le module d'émission 75 est, dans ce cas, configuré pour émettre le signal d'alerte en direction du module d'acquisition/envoi 40 pour commander un décalage selon une direction de décalage et une distance prédéterminées de l'affichage du contenu.

La distance est par exemple égale à 1cm.

De manière alternative, la distance est définie comme un pourcentage d'une étendue d'une surface unitaire 80 selon la direction de décalage.

La distance est avantageusement supérieure à 100 pourcent de l'étendue d'une surface unitaire selon la direction de décalage, afin que chaque point d'une sélection sur l'écran tactile ne corresponde plus à un appui dans la même surface unitaire 80 qu'avant le décalage.

Dans l'exemple selon lequel chaque surface unitaire 80 est rectangulaire, la direction de décalage est par exemple parallèle à un coté d'une surface unitaire 80 et d'une distance supérieure à une longueur de ce côté. La direction est par exemple horizontale.

Dans l'exemple de la figure 1, le dispositif électronique de service 25 est par exemple un dispositif électronique programmable, comportant une mémoire électronique 85 et un processeur 90 associé à la mémoire électronique.

Dans un mode de réalisation, le système électronique de traitement 30 et le système électronique de contrôle 35 sont réalisés chacun sous forme d'un logiciel. En particulier, chacun des modules de réception 50, de détermination 55, de détection 60, de mise à jour 65, d'estimation 70, d'apprentissage 73 et d'émission 75 est réalisé sous forme de modules logiciels comportant des instructions logicielles, exécutables par le processeur 90. La mémoire 85 du dispositif électronique de service est alors apte à stocker ces modules logiciels qui forment un programme d'ordinateur qui, lorsqu'il est exécuté par un ordinateur, met en œuvre un procédé de contrôle de contamination tel que décrit.

Ce programme d'ordinateur est en outre apte à être enregistré sur un support, non représenté, lisible par ordinateur. Le support lisible par ordinateur est par exemple un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non volatil (par exemple EPROM, EEPROM, Flash, N-VRAM), une carte magnétique ou une carte optique. Sur le support lisible est alors mémorisé un programme d'ordinateur comprenant des instructions logicielles.

En variante non représentée, le module de détermination 55, le module de détection 60, le module de mise à jour 65, le module d'estimation 70, le module d'apprentissage 73 le module d'émission 75 et en complément facultatif le module de réception 50, le module d'acquisition/envoi 40, et le module de traitement 45 sont réalisés chacun sous forme d'un composant logique programmable, tel qu'un FPGA (de l'anglais *Field Programmable Gate Array*), ou encore d'un circuit intégré tel qu'un ASIC (de l'anglais *Application-Specific Integrated Circuit).*

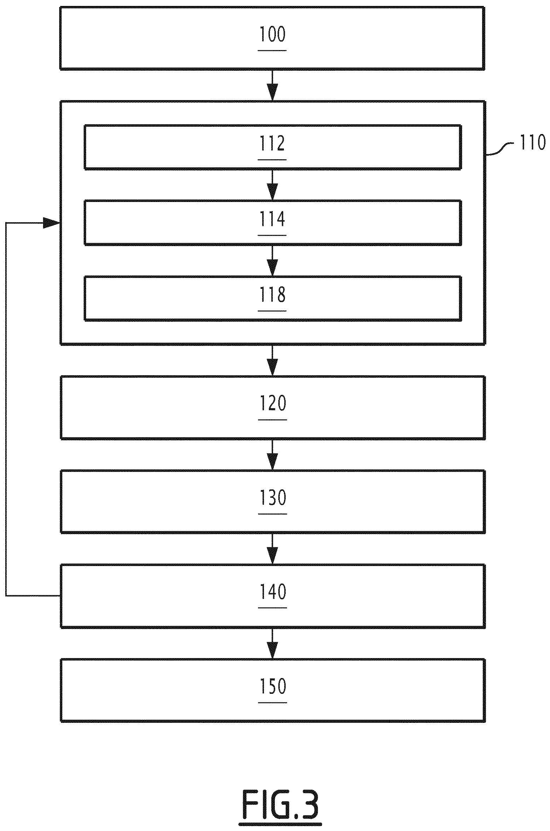

Le fonctionnement du dispositif électronique de service 25, et en particulier du système électronique de contrôle 35 selon l'invention, va à présent être décrit en regard de la figure 3 représentant un organigramme du procédé, selon l'invention, de contrôle d'une quantité de contaminant, le procédé étant mis en œuvre par le système électronique de contrôle 35.

Le fonctionnement du système 35 est tout d'abord décrit dans un cas nominal où un seul contaminant est considéré.

Préalablement au fonctionnement du système, le module d'apprentissage 73 reçoit de la base de données un ensemble de données labellisées. Le module d'apprentissage 73 génère un modèle et/ou corrige le ou les modèles déjà existant au sein du système de contrôle 35 par apprentissage machine automatique à partir des données labellisées. Ainsi à l'issue de cet apprentissage le ou les modèles sont à jour vis-à-vis des données labellisées reçues.

Lors d'une étape de détermination 100, le système électronique de contrôle 35 détermine au moins une surface unitaire sur l'écran tactile 20. A cet effet, le module de détermination 55 détermine un pavage de surfaces unitaires 80 remplissant l'écran tactile 20.

L'étape de détermination 100 étant par exemple effectuée au moment du paramétrage de l'installation 10, ou au moment de l'intégration du système électronique de contrôle 35 au sein de l'installation 10.

Puis, le dispositif électronique de service 25 génère le premier contenu et l'affiche via l'écran tactile 20. L'utilisateur 15, désirant profiter de l'installation 10, effectue un appui sur l'écran tactile 20.

Lors de cet appui, les capteurs de l'écran tactile 20 déterminent la ou les coordonnées des points sélectionnés par l'utilisateur. Ces coordonnées sont comprises dans un signal de sélection émis par les capteurs en direction du système électronique de contrôle 35.

Lors d'une étape de détection 110, le module de détection 60 détecte la ou les surfaces unitaires 80 ayant subi l'appui de l'utilisateur 15.

L'étape de détection 110 comprend par exemple les sous-étapes suivantes.

Lors d'une sous-étape de réception 112, le module de réception 50 reçoit le signal de sélection depuis l'écran tactile 20.

Lors d'une sous-étape optionnelle de génération 114, le module de détection 60 génère une première $z_1$ ou une deuxième $z_2$ surface périphérique selon le deuxième ou quatrième mode de détection, en fonction du nombre de points dont les coordonnées sont comprises dans le signal de sélection.

Lors d'une sous-étape d'identification 118, si le signal de sélection comprend les coordonnées $x_0, y_0$ d'un unique point, le module de détection 60 identifie la ou les surfaces unitaires 80 ayant subi l'appui de l'utilisateur 15, selon le premier ou le deuxième mode de détection. Les termes « détecter » et « identifier » sont utilisés ici comme des synonymes.

Lors de la sous-étape d'identification 118, si le signal de sélection comprend les coordonnées $x_0, y_0, x_1, y_1, x_2, y_2$

7

d'une pluralité de points, le module de détection 60 détecte la ou les surfaces unitaires 80 ayant subi l'appui de l'utilisateur 15, selon le troisième ou le quatrième mode de détection.

Lors d'une étape de mise à jour 120, le module de mise à jour 65 met à jour l'indicateur de nombre d'appuis de chaque surface unitaire 80.

A cet effet, si l'indicateur de nombre d'appuis de chaque surface unitaire 80 est un compteur de nombres d'appuis, le module de mise à jour 65 incrémente le compteur de chaque surface unitaire 80 détectée lors de l'étape de détection 110.

En variante, si l'indicateur de nombre d'appuis de chaque surface unitaire 80 est un estimateur de fréquence d'appui, le module de mise à jour 65 met à jour le nombre d'appuis dans la première fenêtre glissante en incrémentant la fréquence d'appui de chaque surface unitaire 80 détectée et en décomptant les appuis subis par chaque surface 80 préalablement au début de la première fenêtre glissante.

En variante encore, si l'indicateur de nombre d'appuis de chaque surface unitaire 80 est un estimateur de fréquence d'appui, le module de mise à jour 65 met à jour, pour chaque surface unitaire 80, le temps moyen entre deux appuis. Pour cela, le module de mise à jour 65 calcule, pour chaque surface unitaire 80, le temps moyen entre deux appuis à partir des horaires de réception de chaque appui reçu dans la deuxième fenêtre glissante.

Lors d'une étape d'estimation 130, le module d'estimation 70 estime l'indicateur de contamination de chaque surface unitaire 80. A cet effet, le module d'estimation 70 applique le modèle prédéfini aux indicateurs de nombre d'appuis des surfaces unitaires 80. Le modèle prédéfini fournit alors, pour chaque surface unitaire 80, l'indicateur de contamination.

Lors d'une étape de comparaison 140, le module d'estimation 70 compare l'indicateur de contamination de chaque surface unitaire 80 à un seuil prédéfini.

Si l'indicateur de contamination de chacune des surfaces unitaires 80 est inférieur au seuil, alors le procédé de contrôle retourne à l'étape de détection 110.

En revanche, si l'indicateur de contamination d'au moins une surface unitaire 80 est supérieur ou égal au seuil prédéfini, alors le procédé passe à une étape d'émission 150.

Lors de l'étape d'émission 150, le module d'émission 75 émet le signal d'alerte.

Si le signal d'alerte est un message destiné à prévenir un opérateur, alors le module d'émission 75 émet ce signal en direction d'un appareil connecté non représenté.

Si le signal d'alerte est un message destiné à prévenir l'utilisateur 15, alors le module d'émission 75 émet ce signal en direction du module d'acquisition/envoi 40. Le module de traitement 45 génère alors un nouveau contenu comprenant un message textuel ou pictural indiquant, lors de son affichage par l'écran tactile 20, à l'utilisateur 15 qu'un nettoyage est requis.

Si le signal d'alerte est un signal de commande d'un décalage de l'affichage du contenu, alors le module d'émission émet ce signal en direction du système électronique de traitement 30. Après émission du signal d'alerte, le procédé retourne à l'étape de détection 110. Dans l'exemple où le signal d'alerte est un signal de commande, le module de traitement 30 génère alors un nouveau contenu comprenant les éléments du premier contenu mais décalés horizontalement de la distance prédéterminée.

L'homme du métier remarquera que le décalage du contenu à afficher évite la concentration d'appui sur une ou plusieurs mêmes surfaces unitaires 80. Ainsi le risque de contamination est réduit.

En variante, lors de l'étape de comparaison 140, le module d'estimation 70 compare l'indicateur de contamination de chaque surface unitaire 80 à un premier $s_1$ et un deuxième $s_2$ seuils. Le deuxième seuil est supérieur au premier seuil.

Si l'indicateur de contamination d'au moins une des surfaces unitaires 80 est supérieur au premier seuil, alors, lors de l'étape d'émission 150, le signal d'alerte émis est le signal de commande.

Si l'indicateur de contamination d'au moins une des surfaces unitaires 80 est supérieur ou égal au deuxième seuil, alors, lors de l'étape d'émission, le signal d'alerte émis est un message indiquant qu'un nettoyage de l'écran tactile est requis.

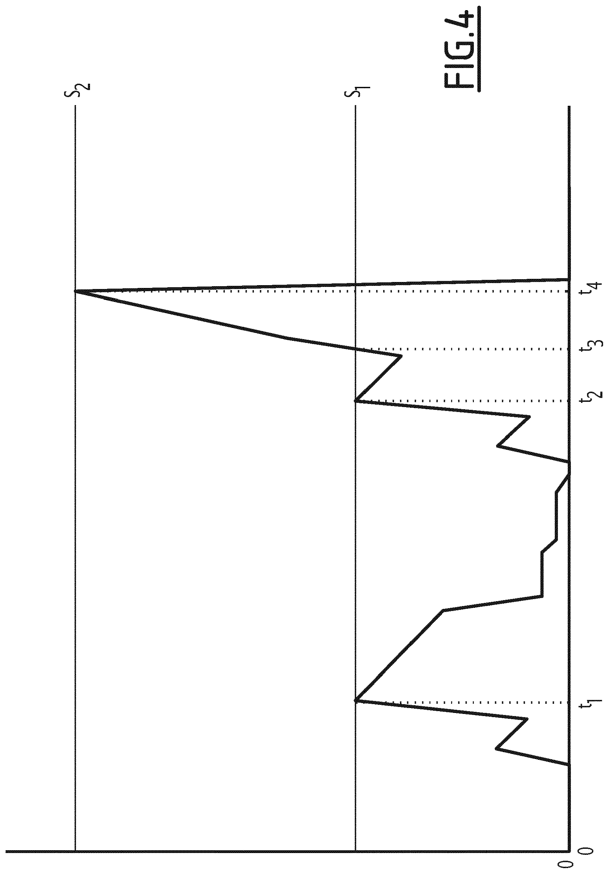

La figure 4 illustre cette variante. Plus particulièrement, la figure 4 montre l'évolution temporelle d'un indicateur de contamination d'une surface unitaire 80 respective.

Aux instants $t_1$, $t_2$, et $t_3$, l'indicateur de contamination dépasse le premier seuil $s_1$. Par suite, le signal de commande est émis lors de l'étape d'émission 150, conduisant à un décalage de l'affichage du contenu. Suite à ce décalage, l'indicateur de contamination décroit.

Cependant, le décalage de l'affichage de l'instant $t_3$ ne suffit à faire décroître l'indicateur de contamination. Une telle situation est par exemple caractéristique d'une forte utilisation de l'installation 10. Ensuite, à l'instant $t_4$, l'indicateur de contamination atteint le deuxième seuil $s_2$, le module d'émission 75 émet alors, lors de l'étape d'émission 150, le message d'alerte. Ceci conduit alors à un nettoyage de l'écran tactile réduisant sensiblement à zéro l'indicateur de contamination.

En variante encore, plusieurs contaminants sont considérés. Selon cette variante, l'ensemble des étapes de détermination 100, de détection 110 et de mise à jour 120 sont analogues au fonctionnement nominal décrit ci-dessus. Cependant, lors de l'étape d'estimation, le modèle fournit, pour chaque surface unitaire 80, un indicateur de contamination pour chaque contaminant considéré. Par suite, les étapes d'estimation 140, et le cas échéant d'émission 150, sont effectuées pour chaque contaminant considéré à partir des indicateurs de contamination et du seuil associés.

Selon une variante de réalisation, le système électronique de contrôle 35 est partiellement déporté de l'installation 10. En particulier, les modules de réception 50 et d'émission 75 sont compris dans l'installation sous forme de relais des communications et les modules de détermination 55, de détection 60, de mise-à-jour 65, d'estimation 70, et d'apprentissage 73 sont déportés dans un serveur éloigné. Ainsi, selon cette variante de réalisation, les modules de réception 50 et d'émission 75 font office de relais entre le système électronique de traitement 30 et l'écran tactile 20 d'une part, et le serveur d'autre part.

On comprend alors que dans cette variante de réalisation, le module de réception 50 est configuré pour transmettre au serveur toutes les données reçues depuis le système de traitement 30 et la pluralité de capteurs de l'écran tactile 20. Le module d'émission 75 est configuré pour émettre le signal d'alerte suite à une instruction provenant du serveur.

Ainsi, avantageusement, le procédé et le système selon l'invention permettent de contrôler la quantité de contaminant présent sur l'écran tactile de manière plus simple.

En outre, avantageusement, ne requiert pas l'implémentation de nouveaux capteurs au sein de l'installation. Ainsi, le système et le procédé selon l'invention sont plus facilement implémentables au sein d'une installation déjà existante.

**Revendications**

1. Procédé de contrôle de contamination par au moins un contaminant, d'un écran tactile (20) d'une installation (10), l'écran tactile (20) étant adapté pour recevoir des commandes d'utilisateur(s) (15) par appui digital, le procédé étant mis en œuvre par un système électronique de contrôle (35) et étant **caractérisé en ce qu'**il comprend les étapes suivantes :

   - détermination (100) d'au moins une surface unitaire (80) sur l'écran tactile (20), l'écran tactile (20) comprenant au moins deux surfaces unitaires (80),
   - détection (110) de la ou des surfaces unitaires (80) ayant subi un appui d'un utilisateur (15),
   - mise à jour (120) d'un indicateur de nombre d'appuis par surface unitaire (80),
   - estimation (130) d'au moins un indicateur de contamination par au moins un contaminant prédéterminé, en fonction des indicateurs de nombre d'appuis associés à chaque surface unitaire (80), l'indicateur de contamination étant associé à au moins l'une des surfaces unitaires (80), et
   - si le ou au moins l'un des indicateurs de contamination atteint ou dépasse un seuil, émission (150) d'un signal d'alerte
   lors de l'étape d'estimation (130), un modèle prédéfini étant appliqué au ou à au moins l'un des indicateurs de nombre d'appuis, le modèle produisant l'au moins un indicateur de contamination,
   le modèle prédéfini dépendant de paramètres physiques de diffusion et/ou de concentration du contaminant sur l'écran tactile (20),
   le modèle prenant en compte l'inclinaison de l'écran tactile (20), de manière prédéfinie.

2. Procédé selon la revendication 1, dans lequel le modèle prend en outre en compte des données de température.

3. Procédé selon la revendication 1 ou 2, dans lequel l'installation (10) est choisie dans un groupe constitué de :

   - un automate de vente de titres de transport,
   - un automate de vente de titres de parking, et
   - un système audiovisuel embarqué dans un véhicule.

4. Procédé selon l'une quelconque des revendications 1 à 3, dans lequel lors de l'étape d'émission (150), le signal d'alerte comprend un message destiné à prévenir un opérateur ou un utilisateur qu'un nettoyage de l'écran tactile (20) est requis.

5. Procédé selon l'une quelconque des revendications 1 à 4, dans lequel l'écran tactile (20) est propre à afficher un contenu sélectionnable, et dans lequel lors de l'étape d'émission (150), le signal d'alerte comprend un signal de commande d'un décalage de l'affichage du contenu sélectionnable.

6. Procédé selon la revendication 5, dans lequel le signal de commande est un signal de commande d'un décalage horizontal de l'affichage du contenu.

7. Procédé selon l'une quelconque des revendications 1 à 6, dans lequel lors de l'étape de détermination (100), les surfaces unitaires définissent un pavage remplissant l'écran tactile (20).

8. Procédé selon l'une quelconque des 1 à 7, dans lequel l'étape de détection (110) comprend pour chaque appui les sous-étapes suivantes :

- réception (112) de coordonnées correspondant à un ensemble de point(s) d'appui sur l'écran tactile (20), et
- identification (118) d'au moins une surface unitaire (80) ayant subi l'appui à partir des coordonnées reçues.

9. Procédé selon la revendication 8, dans lequel l'étape de détection (110) comprend, entre la sous-étape de réception (112) et la sous-étape d'identification (118), une sous-étape de détermination (114) d'une zone périphérique ($z_1$ ; $z_2$) incluant le ou les points d'appui.

10. Programme d'ordinateur comportant des instructions logicielles qui, lorsqu'elles sont exécutées par un ordinateur ou un processeur, conduisent celui-ci à mettre en œuvre un procédé de contrôle de contamination par au moins un contaminant selon l'une quelconque des revendications 1 à 9.

11. Système électronique (35) de contrôle de contamination par au moins un contaminant, d'un écran tactile (20) d'une installation (10), l'écran tactile (20) étant adapté pour recevoir des commandes d'utilisateur (15) par appui digital, le système électronique de contrôle (35) étant **caractérisé en ce qu'**il comprend :

- un module de détermination (55) configuré pour déterminer au moins une surface unitaire (80) sur l'écran tactile (20), l'écran tactile (20) comprenant au moins deux surfaces unitaires (80),
- un module de détection (60), configuré pour détecter la ou les surfaces unitaires (80) ayant subi un appui d'un utilisateur (15),
- un module de mise à jour (65) configuré pour mettre à jour un indicateur de nombre d'appuis par surface unitaire (80),
- un module d'estimation (70) configuré pour estimer au moins un indicateur de contamination par au moins un contaminant prédéterminé, en fonction des indicateurs de nombre d'appuis associés à chaque surface unitaire (80), l'indicateur de contamination étant associé à au moins une des surfaces unitaires (80), et
- un module d'émission (70) configuré pour, si le ou au moins l'un des indicateurs de contamination atteint ou dépasse un seuil, émettre un signal d'alerte,
le module d'estimation (70) étant en outre configuré pour appliquer un modèle prédéfini au ou à au moins l'un des indicateurs de nombre d'appuis, le modèle produisant l'au moins un indicateur de contamination,
le modèle prédéfini dépendant de paramètres physiques de diffusion et/ou de concentration du contaminant sur l'écran tactile (20),
le modèle prenant en compte l'inclinaison de l'écran tactile (20), de manière prédéfinie.

**Patentansprüche**

1. Verfahren zur Überprüfung eines Berührungsbildschirms (20) einer Anlage (10) auf Verunreinigung durch mindestens eine Verunreinigung, wobei der Berührungsbildschirm (20) dazu ausgelegt ist, Befehle von einem Benutzer/-Benutzern (15) durch digitale Berührung zu empfangen, wobei das Verfahren durch ein elektronisches Steuersystem (35) durchgeführt wird und **dadurch gekennzeichnet, dass** es mindestens die folgenden Schritte umfasst:

- Bestimmen (100) mindestens einer Einheitsfläche (80) auf dem Berührungsbildschirm (20), wobei der Berührungsbildschirm (20) mindestens zwei Einheitsflächen (80) umfasst,
- Nachweisen (110) der Einheitsfläche(n) (80), die von einem Benutzer (15) eine Berührung erfahren hat (haben),
- Aktualisieren (120) einer Anzeige der Anzahl von Berührungen pro Einheitsfläche (80),
- Schätzen (130) mindestens einer Anzeige der Verunreinigung durch mindestens eine vorherbestimmte Verunreinigung in Funktion der Anzeigen der Anzahl von Berührungen, die mit jeder Einheitsfläche (80) assoziiert ist, wobei die Anzeige der Verunreinigung mit mindestens einer der Einheitsflächen (80) assoziiert ist, und
- wenn die oder mindestens eine der Anzeigen der Verunreinigung eine Schwelle erreicht oder übersteigt, Ausgeben (150) eines Warnsignals,
beim Schritt des Schätzens (130), wobei ein vordefiniertes Modell auf mindestens die eine der Anzeigen der Anzahl von Berührungen angewendet wird, das Modell mindestens eine Anzeige der Verunreinigung erzeugt, wobei das vordefinierte Modell von physischen Parametern der Ausbreitung und/oder der Konzentration der Verunreinigung auf dem Berührungsbildschirm (20) abhängt,

wobei das Modell die Neigung des Berührungsbildschirms (20) auf vorherbestimmte Weise berücksichtigt.

2. Verfahren nach Anspruch 1, wobei das Modell außerdem Temperaturdaten berücksichtigt.

3. Verfahren nach Anspruch 1 oder 2, wobei die Anlage (10) ausgewählt ist aus der Gruppe, bestehend aus:

- einem Verkaufsautomaten von Fahrscheinen,
- einem Verkaufsautomaten von Parktickets, und
- einem audiovisuellen System, das in ein Fahrzeug eingebaut ist.

4. Verfahren nach einem der Ansprüche 1 bis 3, wobei beim Schritt des Ausgebens (150) das Alarmsignal eine Meldung umfasst, die ausgelegt ist, um einen Bediener oder einen Benutzer zu benachrichtigen, dass eine Reinigung des Berührungsbildschirms (20) erforderlich ist.

5. Verfahren nach einem der Ansprüche 1 bis 4, wobei der Berührungsbildschirm (20) dazu geeignet ist, einen auswählbaren Inhalt anzuzeigen, und wobei beim Schritt des Ausgebens (150) das Alarmsignal ein Steuersignal einer Verschiebung der Anzeige des auswählbaren Inhalts umfasst.

6. Verfahren nach Anspruch 5, wobei das Steuersignal ein Steuersignal einer horizontalen Verschiebung der Anzeige des Inhalts ist.

7. Verfahren nach einem der Ansprüche 1 bis 6, wobei beim Schritt des Bestimmens (100) die Einheitsflächen eine Pflasterung definieren, die den Berührungsbildschirm (20) füllt.

8. Verfahren nach einem der Ansprüche 1 bis 7, wobei der Schritt des Nachweisens (110) für jede Berührung die folgenden Unterschritte umfasst:

- Empfangen (112) von Koordinaten, die einer Einheit von Berührungspunkt(en) auf dem Berührungsbildschirm (20) entsprechen, und
- Identifizieren (118) mindestens einer Einheitsfläche (80), die eine Berührung ausgehend von den empfangenen Koordinaten erfahren hat.

9. Verfahren nach Anspruch 8, wobei der Schritt des Nachweisens (110) zwischen dem Unterschritt des Empfangens (112) und dem Unterschritt des Identifizierens (118) einen Unterschritt des Bestimmens (114) einer peripheren Zone $(z_1; z_2)$ umfasst, die den oder die Berührungspunkte beinhaltet.

10. Computerprogramm, umfassend Software-Anweisungen, die, wenn sie von einem Computer oder einem Prozessor durchgeführt werden, diesen dazu veranlassen, ein Verfahren zur Überprüfung der Verunreinigung durch mindestens eine Verunreinigung nach einem der Ansprüche 1 bis 9 durchzuführen.

11. Elektronisches System (35) zur Überprüfung der Verunreinigung durch mindestens eine Verunreinigung eines Berührungsbildschirms (20) einer Anlage (10), wobei der Berührungsbildschirm (20) dazu ausgelegt ist, Benutzerbefehle (15) durch digitale Berührung zu empfangen, wobei das elektronische System zur Überprüfung (35) **dadurch gekennzeichnet ist, dass** es Folgendes umfasst:

- ein Bestimmungsmodul (55), das konfiguriert ist, um mindestens eine Einheitsfläche (80) auf dem Berührungsbildschirm (20) zu bestimmen, wobei der Berührungsbildschirm (20) mindestens zwei Einheitsflächen (80) umfasst,
- ein Nachweismodul (60), das konfiguriert ist, um die Einheitsfläche(n) (80) nachzuweisen, die eine Berührung eines Benutzers (15) erfahren haben,
- ein Aktualisierungsmodul (65), das konfiguriert ist, um eine Anzeige der Anzahl von Berührungen pro Einheitsfläche (80) zu aktualisieren,
- ein Schätzmodul (70), das konfiguriert ist, um mindestens eine Anzeige der Verunreinigung durch mindestens eine vorherbestimmte Verunreinigung in Funktion der Anzeigen der Anzahl von Berührungen zu schätzen, die mit jeder Einheitsfläche (80) assoziiert sind, wobei die Anzeige der Verunreinigung mit mindestens einer der Einheitsflächen (80) assoziiert ist, und
- ein Ausgabemodul (70), das konfiguriert ist, um, wenn die oder mindestens eine der Anzeigen der Verunreinigung eine Schwelle erreicht oder übersteigt, ein Warnsignal auszugeben,
wobei das Schätzmodul (70) außerdem konfiguriert ist, um ein vordefiniertes Modell auf die oder auf mindestens eine der Anzeigen der Anzahl von Berührungen anzuwenden, wobei das Modell mindestens eine Anzeige der Verunreinigung erzeugt,
wobei das vordefinierte Modell von physischen Parametern der Verbreitung und/oder der Konzentration der Verunreinigung auf dem Berührungsbildschirm (20) abhängt,
das Modell die Neigung des Berührungsbildschirms (20) auf vorherbestimmte Weise berücksichtigt.

**Claims**

1. A method for checking a touch screen (20) of an installation (10) for contamination by at least one contaminant, the touch screen (20) being suitable for receiving commands from user(s) (15) by finger pressure, the method being implemented by an electronic control system (35) and being **characterized in that** it comprises the following steps:

   - determining (100) at least one unit surface area (80) on the touch screen (20), the touch screen (20) comprising at least two unit surface areas (80),
   - detecting (110) the unit surface area(s) (80) having been pressed by a user (15),
   - updating (120) an indicator of the number of presses per unit surface area (80),
   - estimating (130) at least one contamination indicator by at least one predetermined contaminant, based on the indicators of number of presses associated with each unit surface area (80), the contamination indicator being associated with at least one of the unit surface areas (80), and
   - if the or at least one of the contamination indicators reaches or exceeds a threshold, emitting (150) an alert signal during the estimating step (130), a predefined model being applied to the or at least one of the number of press indicators, the model producing the at least one contamination indicator,
   the predefined model depending on physical parameters of diffusion and/or concentration of the contaminant on the touch screen (20),
   the model taking account of the incline of the touch screen (20), in a predefined manner.

2. The method according to claim 1, wherein the model further takes into account temperature data.

3. The method according to claim 1 or 2, wherein the installation (10) is chosen from a group consisting of:

   - a transportation ticket vending machine,
   - a parking ticket vending machine, and
   - an audiovisual system embedded in a vehicle.

4. The method according to any one of claims 1 to 3, wherein during the transmission step (150), the alert signal comprises a message intended to warn an operator or a user that cleaning of the touch screen (20) is required.

5. The method according to any one of claims 1 to 4, wherein the touch screen (20) is capable of displaying selectable content, and wherein during the transmission step (150), the alert signal comprises a signal for controlling a display shift of the selectable content.

6. The method according to claim 5, wherein the control signal is a control signal for a horizontal shift in the display of the content.

7. The method according to any one of claims 1 to 6, wherein during the determining step (100), the unit surface areas define a tiling filling the touch screen (20).

8. The method according to any one of [claims] 1 to 7, wherein the detecting step (110) comprises, for each press, the following sub-steps:

   - receiving (112) coordinates corresponding to a set of pressing point(s) on the touch screen (20), and
   - identifying (118) at least one unit surface area (80) having undergone the pressing from the coordinates received.

9. The method according to claim 8, wherein the detecting step (110) comprises, between the receiving sub-step (112) and the identifying sub-step (118), a determining sub-step (114) for determining a peripheral zone ($z_1$; $z_2$) including the pressing point(s).

10. A computer program comprising software instructions which, when executed by a computer or a processor, implement a method for checking contamination by at least one contaminant according to any one of claims 1 to 9.

11. An electronic system (35) for checking a touch screen (20) of an installation (10) for contamination by at least one contaminant, the touch screen (20) being suitable for receiving commands from user(s) (15) by finger pressure, the electronic checking system (35) being **characterized in that** it comprises:

- a determining module (55) configured to determine at least one unit surface area (80) on the touch screen (20), the touch screen (20) comprising at least two unit surface areas (80),
- a detecting module (60), configured to detect the unit surface area(s) (80) that have been pressed by a user (15),
- an updating module (65) configured to update an indicator of number of presses per unit surface area (80),
- an estimating module (70) configured to estimate at least one contamination indicator by at least one predetermined contaminant, based on the indicators of the number of presses associated with each unit surface area (80), the contamination indicator being associated with at least one of the unit surface areas (80), and
- an emitting module (70) configured, if the or at least one of the contamination indicators reaches or exceeds a threshold, to emit an alert signal,
the estimating module (70) further being configured to apply a predefined model to the or at least one of the number of presses indicators, the model producing the at least one contamination indicator,
the predefined model depending on physical parameters of diffusion and/or concentration of the contaminant on the touch screen (20),
the model taking account of the incline of the touch screen (20), in a predefined manner.

<u>FIG.1</u>

EP 4 309 029 B1

FIG.2

<u>FIG.3</u>

FIG.4

## RÉFÉRENCES CITÉES DANS LA DESCRIPTION

**Documents brevets cités dans la description**

- US 20140232662 A1
- US 2021052756 A1
- WO 2019136381 A1
- US 2020279642 A1
- JP 2018084974 A